(19) Europäisches Patentamt
European Patent Office
Office européen des brevets

(11) Numéro de publication: **0 434 574 B1**

(12) # FASCICULE DE BREVET EUROPEEN

(45) Date de publication de fascicule du brevet: **25.01.95**

(51) Int. Cl.[6]: **C09D 183/04**, C08G 77/38, C08G 77/20, C08G 77/04

(21) Numéro de dépôt: **90420502.8**

(22) Date de dépôt: **20.11.90**

(54) **Composition organopolysiloxane à reste cyclopentenyle réticulable en couche mince sous U.V.**

(30) Priorité: **21.11.89 FR 8915529**

(43) Date de publication de la demande:
**26.06.91 Bulletin 91/26**

(45) Mention de la délivrance du brevet:
**25.01.95 Bulletin 95/04**

(84) Etats contractants désignés:
**AT BE CH DE DK ES FR GB GR IT LI LU NL SE**

(56) Documents cités:
**EP-A- 0 180 843**
**EP-A- 0 261 520**
**EP-A- 0 282 927**
**WO-A-87/03537**
**GB-A- 1 058 022**
**US-A- 4 611 042**

**CHEMICAL ABSTRACTS, vol. 91, no. 4, 23 juillet 1979, page 27, abrégé no. 21497m, Columbus, Ohio, US; A.I. NOGAIDELI: "Synthesis of poly(organosiloxanes) with olicyclopentenyl radicals at the silicon atoms"**

(73) Titulaire: **RHONE-POULENC CHIMIE**
**25, Ouai Paul Doumer**
**F-92408 Courbevoie Cédex (FR)**

(72) Inventeur: **Cavezzan, Jacques**
**Résidence du Parc Tête d'Or,**
**4 Allée Marcel Achard**
**F-69100 Villeurbanne (FR)**
Inventeur: **Frances, Jean-Marc**
**9, avenue Condorcet**
**F-69100 Villeurbanne (FR)**

(74) Mandataire: **Trolliet, Maurice et al**
**RHONE-POULENC CHIMIE,**
**Direction de la Propriété Industrielle,**
**Centre de Recherches des Carrières,**
**B.P. 62**
**F-69192 Saint-Fons Cédex (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(3.10/3.09/3.3.3)

## Description

La présente invention concerne une composition organopolysiloxane réticulable en couche mince par exposition à la lumière ultraviolette (sous U.V.).

Il existe déjà de nombreux documents brevets décrivant des compositions organopolysiloxane réticulant en couche mince sous U.V.

Parmi cet état de la technique on peut citer :

- FR-A-2 245 729 : l'organopolysiloxane est porteur de fonctions SiH et Si vinyle,
- FR-A-2 517 684 : l'organopolysiloxane est porteur de fonction alkylamino,
- FR-A-2 526 800 : l'organopolysiloxane est porteur de fonctions époxy et/ou acrylate,
- FR-A-2 447 386 : l'organopolysiloxane est porteur de fonction mercapto,
- US-A-4 611 042 : l'organopolysiloxane est utilisé en mélange avec un composé à groupes mercapto.

Par ailleurs le brevet EP-A-0 282 927 enseigne la préparation de diorganopolysiloxanes à reste dicyclopentenyle par hydrosilylation partielle d'hydrogénoorganopolysiloxanes ; toutefois ce document n'enseigne pas que de tels diorganopolysiloxanes sont susceptibles de réticuler en couche mince par exposition à la lumière UV.

L'homme du métier, utilisateur de composition organopolysiloxane réticulable en couche mince sous U.V. est à la recherche d'une composition silicone présentant en particulier les propriétés suivantes :

- elle réticule sous U.V. sans qu'il soit nécessaire d'apporter en outre des calories par irradiation infrarouge,
- elle est stable au stockage et présente à l'air ambiant un "pot life", c'est-à-dire une vie en pot suffisamment longue avant d'être durcie (au moins plusieurs jours),
- elle réticule sous U.V. suivant un temps d'exposition le plus court possible,
- elle adhère convenablement au support,
- elle ne comporte pas de préférence des catalyseurs métalliques,
- elle peut être utilisée en masse, c'est-à-dire sans solvant organique,
- elle peut durcir, que la couche de revêtement soit très mince (quelques $\mu$m ou dizaines de $\mu$m), ou relativement épaisse (quelques millimètres).

La présente invention a précisément pour but de proposer une composition qui présente en particulier l'ensemble des propriétés ci-dessus et ce but est atteint par la présente invention qui concerne en effet une composition organopolysiloxane à reste cyclopentenyle réticulable en couche mince par exposition à la lumière ultraviolette, caractérisée en ce qu'elle comporte :

A. - 100 parties en poids de diorganopolysiloxane comportant par molécule au moins 3 restes cyclopentenyle, chacun de ces groupes étant directement lié, par une liaison SiC, à un atome de silicium différent, et étant choisi parmi ceux de formules

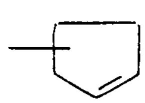 (2)a 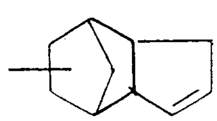 (2)b 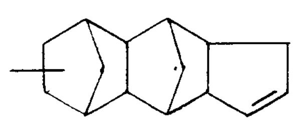 (2)c

B.- 0,01 à 20 parties en poids d'au moins un photoinitiateur.

Le polymère (A) répond de préférence à la formule :

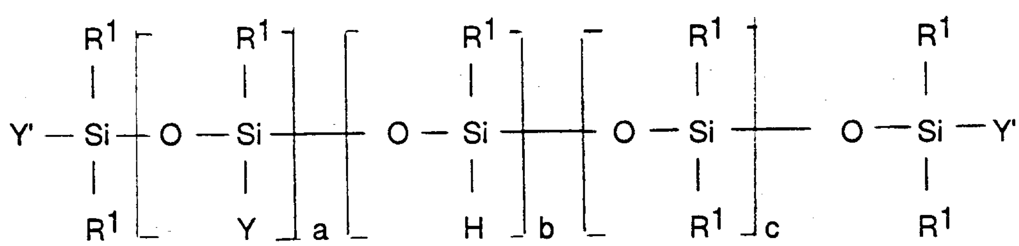 (1)

dans laquelle :

- Y représente un reste cyclopentenyle choisi parmi ceux de formules (2)a, (2)b et (2)c,

- $R^1$ est un radical choisi parmi les radicaux alkyle en C1 - C6 et phényle, au moins 50 % en nombre des radicaux $R^1$ étant méthyle et/ou phényle,
- Y' est Y ou $R^1$,
- a est un nombre entier compris entre 1 et 50 inclus,
- b est un nombre entier compris entre 0 et 50 inclus,
- c est un nombre entier compris entre 0 et 1 000, de préférence entre 10 et 500 sous réserve que si a = 1, Y' est Y
  et si a = 2 au moins un des 2 Y' est Y.

Le polymère de formule (1) est sensiblement linéaire et ses malles siloxanes sont réparties de façon statistique séquencée ou à bloc.

Toutefois la présence dans la chaîne de motif siloxane de fourmule $R^1SiO_{1,5}$ n'est pas exclue, à une teneur en nombre d'au plus 5 %.

Les polymères de formule (1) préférés sont ceux qui portent le reste de formule $(2)_b$ et qui se présentent sous forme d'huiles plus ou moins visqueuses et qui possèdent donc une viscosité à 25°C inférieure à 500 000 mPa.s. La zone de viscosité préférée est située entre 1 000 et 250 000 mPa.s, étant entendu qu'un mélange de polymères (1) de viscosité différente peut être utilisé, la viscosité du mélange devant être de préférence inférieure à 500 000 mPa.s.

Il existe plusieurs procédés permettant d'obtenir le polymère de formule (1).

Selon un premier procédé on effectue l'hydrosilylation au moins partielle d'un polymère de formule :

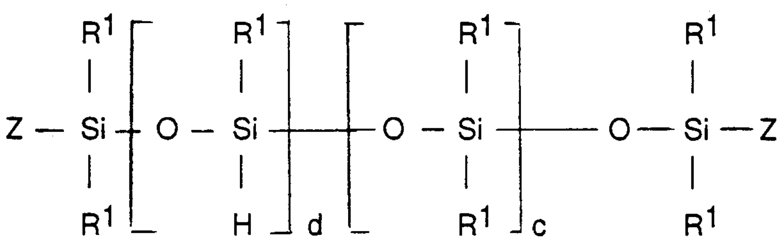 , (3)

dans laquelle :

- $R^1$ et c ont la même signification qu'à la formule (1) ci-dessus,
- d = a + b,
- Z est $R^1$ ou H et si d = 1, les deux Z sont H et
  si d = 2, au moins un des Z est H

sur le dicyclopentadiène ou ses oligomères, en particulier ceux choisis parmi ceux de formule :

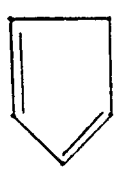 $(4)_a$ 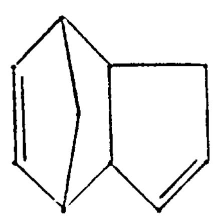 $(4)_b$ 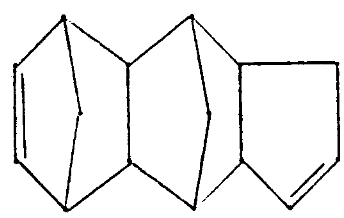 $(4)_c$

en présence d'une quantité catalytiquement efficace d'un catalyseur au platine.

Les catalyseurs au platine utilisés pour réaliser la réaction d'hydrosilylation des polymères de formule (3) sur le cyclopentadiène ou ses oligomères , de formules $(4)_a$, $(4)_b$ et $(4)_c$ sont amplement décrits dans la littérature, on peut en particulier citer les complexes du platine et d'un produit organique décrit dans les brevets américains US-A-3 159 601, US-A-3 159 602, US-A-3 220 972 et les brevets européens EP-A-57 459, EP-A-188 978 et EP-A-190 530 et les complexes du platine et d'organopolysiloxane vinylé, décrits dans les brevets américains US-A-3 419 593, US-A-3 715 334, US-A-3 377 432 et US-A-3 814 730.

Pour faire réagir le polymère à SiH de formule (3) sur le cyclopentadiène on utilise généralement une quantité de catalyseur au platine calculée en poids de platine métal comprise entre 5 et 600 ppm, de préférence entre 10 et 200 ppm basés sur le poids de polymère à SiH de formule (3).

La réaction d'hydrosilylation peut avoir lieu en masse ou au sein d'un solvant organique volatil tel que le toluène, l'heptane, le xylène, le tétrahydrofuranne et le tétrachloroéthylène.

Il est généralement souhaitable de chauffer le mélange réactionnel à une température de 60 à 120 °C pendant le temps nécessaire pour que la réaction soit complète. Par ailleurs il est souhaitable d'ajouter goutte à goutte le polymère à SiH sur le cyclopentadiène en solution dans un solvant organique.

On vérifie le degré d'avancement de la réaction en dosant les SiH résiduels par la potasse alcoolique puis on élimine le solvant par exemple par distillation sous pression réduite.

L'huile brute de formule (1) peut être purifiée, par exemple par passage sur une colonne absorbante de silice.

Un autre procédé de préparation des polymères de formule (1) dans le cas où b = 0 consiste à réaliser l'homo- et/ou la co-condensation, suivie éventuellement d'une étape d'équilibration d'un réactif comportant au moins un silane de formule :

$$(X)_{3-e} - \overset{\displaystyle Y}{\overset{|}{Si}} - (R^1)_e \qquad (5)$$

dans laquelle Y et $R^1$ ont la signification donnée à la formule (1), e est 1 ou 0 et X représente un groupe hydrolysable tel qu'un atome de chlore ou un groupe alcoxy en $C_1$-$C_4$. Dans le cas de la co-condensation, l'autre silane peut être un composé de formule $(X)_{4-e}$-Si-$(R^1)_e$ dans laquelle X, e et $R^1$ ont les significations données ci-avant dans les formules (1) et (5).

Un tel procédé est décrit en détails dans le brevet européen EP-A-261 520.

Comme photosensibilisateur on recommande d'utiliser un mélange de préférence 50/50 en poids de benzophénone et d'hydroxy-1 cyclohexyle phénylcétone ou encore la
cétone de MICHLER de formule

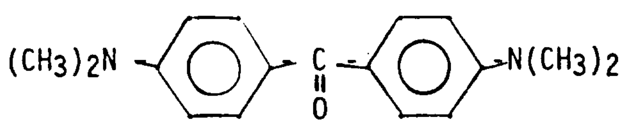

en mélange de préférence 50/50 avec de la benzophénone.

Cependant d'autres photosensibilisateurs sont utilisables et comprennent, par exemple, l'hydroxy-2 méthyl-2 phényl-1 propanone, la cyclohexanone, l'acétophénone, la propiophénone, la benzophénone, la xanthone, la fluorénone, le benzaldéhyde, le fluorène, l'anthraquinone, la triphénylamine, le carbozaole, la 3-méthylacétophénone, la 4-méthylacétophénone, la 3-pentylacétophénone, la 4-méthoxyacétophénone, la 3-bromoacétophénone, la 4-allylacétophénone, le p-diacétylbenzène, la 3-méthoxybenzophénone, la 4-méthylbenzophénone, la 4-chlorobenzophénone, la 4,4'-diméthoxybenzophénone, la 4-chloro-4'-benzylbenzophénone, la 3-chloroxanthone, la 3,9-dichloroxanthone, la 3-chloro-8-nonylxanthone.

La quantité de photosensibilisateur est le plus souvent comprise entre 0,1 et 8 parties pour 100 parties du polymère (A).

Le rayonnement U.V. utilsié présente une longueur d'onde comprise entre 200 et 400 nanomètres, de préférence compris entre 254 et 360 nanomètres.

La durée d'irradiation peut être très courte et elle est généralement inférieure à 1 seconde et est de l'ordre de quelques centièmes de seconde pour les faibles épaisseurs de revêtements. La réticulation effectuée est excellente même en l'absence de tout chauffage.

Bien entendu, on peut régler le temps de durcissement notamment par le choix des constituants (A) et (B), par le nombre de lampes U.V. utilisées, par la durée d'exposition aux U.V. et par la distance entre la composition et la lampe U.V.

Les compositions selon l'invention sont utilisables telles quelles ou en solution dans un solvant organique. Elles sont utiles dans le domaine des revêtements antiadhérents sur les matériaux cellulosiques, les peintures, l'encapsulation de composants électriques et électroniques, les revêtements lithographiques, les revêtements pour textiles.

Les compositions selon l'invention peuvent comporter en plus de (A) et (B) d'autres ingrédients tels que des pigments, des agents fongicides, bactéricides et antimicrobiens, des inhibiteurs de corrosion.

Les compositions selon l'invention sont de préférence utilisées comme compositions sans solvant pur rendre un matériau non adhérent, tel que des feuilles métalliques, du verre, des matières plastiques ou du papier, à d'autres matériaux auxquels il adhérerait normalement et, dans le cas d'une composition sans solvant, la composition présente avantageusement une viscosité ne dépassant pas 5 000 mPa.s, de préférence comprise entre 20 et 4000 mPa.s à 25 °C.

L'invention vise donc également un procédé permettant de rendre des feuilles de matériau souple non adhérentes à des surfaces auxquelles elles adhèrent normalement, procédé caractérisé en ce qu'il consiste à appliquer une quantité de composition conforme à l'invention, comprise généralement entre 0,1 et 5 g par $m^2$ de surface à enduire et à réticuler la composition par apport d'énergie en totalité fournie par un rayonnement U.V.

Les compositions sans solvant, c'est-à-dire non diluées, sont appliquées à l'aide de dispositifs aptes à déposer, d'une façon uniforme, de faibles quantités de liquides. on peut utiliser à cete effet par exemple le dispositif nommé "Helio glissant" comportant en particulier deux cylindres superposés : le rôle du cylindre placé le plus bas, plongeant dans le bac d'enduction où se trouvent les compositons, est d'imprégner en une couche très mince le cylindre placé le plus haut, le rôle de ce dernier est alors de déposer sur le papier les quantités désirées des compositions dont il est imprégné, un tel dosage est obtenu par réglage de la vitesse respective des deux cylindres qui tournent en sens inverse l'un de l'autre.

Les quantités de compositions déposées sur les supports sont variables et s'échelonnent le plus souvent entre 0,1 et 5 g/$m^2$ de surface traitée. Ces quantités dépendent de la nature des supports et des propriétés antiadhérentes recherchées. Elles sont le plus souvent comprises entre 0,5 et 1,5 g/$m^2$ pour des supports non poreux.

Dans tout ce qui suit et ce qui précède les pourcentages et parties sont en poids, sauf mentions contraires.

Les exemples suivants illustrent l'invention.

- <u>EXEMPLE 1</u> : <u>Préparation de l'huile de formule</u> :

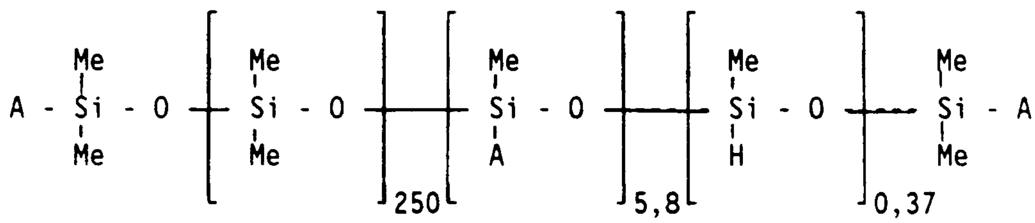

avec

A =

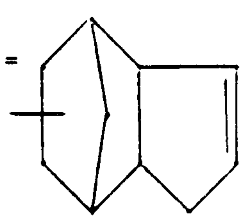

Dans un réacteur tricol, de capacité 3 litres, muni d'un condenseur, d'un système d'agitation central, de contrôle et de régulation de la température, on introduit sous atmosphère inerte d'azote, 97,9 g de dicyclopentadiène fraîchement distillé (0,74 eq) et 232 mg d'une solution à 8,7 % de Pt dans l'hexane d'un complexe du platine Pt* préparé selon le procédé décrit à l'exemple 3 du brevet américain US-A-3 814 730, de formule $Pt(DVTMS)_2$, (DVTMS = divinyl-1,3 tétraméthyl-1,1,3,3 disiloxane).

On porte le mélange réactionnel à 60 °C pendant 45 minutes toujours sous azote, puis on introduit à l'aide d'une ampoule de coulée 1,147 kg (en 150 minutes) de polyméthylhydrogénodiméthylsiloxane de formule moyenne :

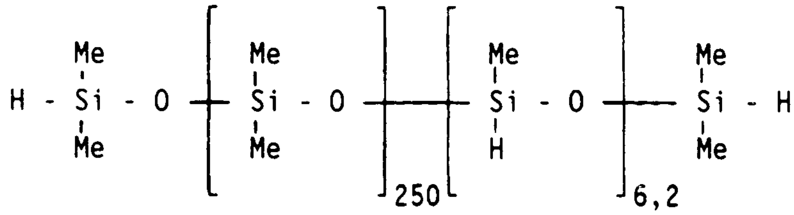

Masse moléculaire en nombre : 19 000

En fin de coulée le taux de transformation des motifs SiH est de : 84 %.

Après 15 heures à 60 °C sous azote le taux de transformation des motifs SiH est de : 95 %.

- EXEMPLE 2 : Préparation de l'huile de formule :

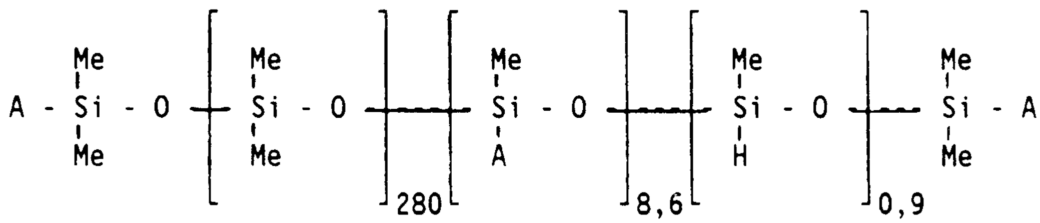

avec

A =

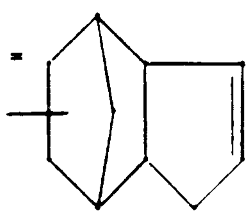

Dans un réacteur tricol, de capacité 3 litres, on introduit 109 g de dicyclopentadiène fraîchement distillé (0,824 eq) et 188 mg d'une solution de catalyseur au platine de formule Pt $(DVTMS)_2$ dans l'hexane à (8,7 % Pt) tel que défini à l'exemple 1.

Le réacteur est muni d'un condenseur, d'un système d'agitation central, de contrôle et de régulation de la température.

On chauffe le mélange réactionnel par l'intermédiaire d'un bain d'huile et on laisse l'appareillage sous atmosphère interte d'azote à 60 °C pendant 45 minutes, puis on introduit à l'aide d'une ampoule de coulée 1,526 kg (en 180 minutes) de polyméthylhydrogénodiméthylsiloxane de formule moyenne :

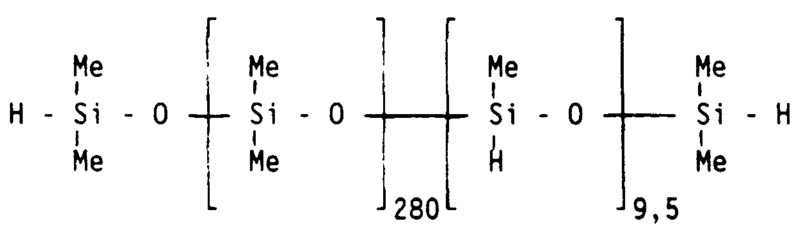

Masse moléculaire en nombre : 21 000

En fin de coulée le taux de transformation des motifs SiH est de : 63,5 %.

Après 15 heures à 60 °C sous azote le taux de transformation des motifs SiH est de : 91 %.

- EXEMPLE 3 : Utilisation des polysiloxanes préparés dans les exemples 1 et 2 pour l'obtention d'élastomères en couches minces sur papier, après exposition de la composition déposée, au rayonnement ultraviolet.

Un bain de traitement est préparé en ajoutant à 100 parties en poids d'une huile polyorganosiloxane à reste cyclopentényle selon l'un des exemples 1 et 2, 5 parties (en poids) d'un photoinitiateur constitué de :

A. - hydroxy-2 méthyl-2 phényl-1 propanone (vendue sous la marque DAROCUR 1173 par la Société MERCK) ou

B. - d'un mélange de benzophénone et d'hydroxy-1 cyclohexylphényl cétone, vendu par la Société CIBA-GEIGY sous la marque IRGACURE 500).

Les lettres A et B désigneront ces photoinitiateurs dans le tableau 1 dont il sera question ci-après.

On agite vigoureusement à température ambiante le mélange polyorganosiloxane + photoinitiateur pendant 10 minutes et on dépose ensuite la composition obtenue, sans utiliser de solvant, sur du papier "glassine" (référence AV 100 de la Société KAMERER) au moyen d'une barre de MAYER n° 0 ; le dépôt correspond à 2,5 g de composition pour 1m$^2$ de papier "glassine".

On fait alors passer ce papier enduit sous une lampe U.V., de technologie FUSION SYSTEM®, caractérisé par :

- une absence d'électrode,
- une excitation par micro-ondes.

En passant sous la lampe U.V. à l'air ambiant, la couche de la composition silicone est durcie et on mesure le temps d'irradiation. La lampe U.V. a une puissance de 120 W/cm. On note la vitesse de défilement du papier en m/mn.

La qualité du revêtement silicone obtenu (sur le papier "glassine") est ensuite évaluée par la mesure des propriétés anti-adhérentes de la couche silicone durcie. Pour cela on met au contact de la couche de silicone durcie, à 20 °C, pendant 20 heures, un ruban adhésif (TESA 4651) et à 70 °C, pendant 20 heures, un ruban adhésif (TESA 4970).

On mesure la force minimale pour détacher le ruban adhésif considéré (TESA) de la couche durcie sur le papier "glassine", suivant la norme européenne FTM n° 3. Cette force est exprimée en Newton par m (N/m).

D'autre part la mesure de l'adhésion subséquente (AS) représente le degré de polymérisation de la couche silicone (AS = 100 % représente une bonne polymérisation). L'adhésion subséquente est le rapport de deux forces d'adhérence mesurées : l'une sur un ruban adhésif mis en contact avec un substrat recouvert avec la composition de l'invention ; et l'autre correspondant au même ruban adhésif mis en contact avec un substrat non recouvert avec la composition de l'invention. Cette mesure est faite selon la norme européenne FTM n° 11 (FINAT TEST METHOD).

Les résultats obtenus figurent dans le tableau ci-après.

Dans tous les cas, le revêtement obtenu présente de bonnes propriétés anti-adhérentes, sans "rubb off", c'est-à-dire avec un bon accrochage du silicone sur le papier.

- EXEMPLE COMPARATIF 4 :

On procède de la même façon qu'à l'exemple 3 à la seule différence qu'on remplace le produit silicone à reste cyclopentényle par un produit commercial vendu par la Société GOLDSCHMIDT sous la référence TEGO® silicone acrylate RC 710 ayant des fonctions acrylates en bout de chaîne et une viscosité à 25 °C égale à 200 mPa.s. Ce produit réticule sous atmosphère contrôlée (azote). Placé dans les mêmes conditions qu'à l'exemple 3 et, par conséquent exposé à l'air ambiant et après un temps d'exposition sous U.V. supérieur à une seconde, on n'observe aucune polymérisation.

TABLEAU

| Produit préparé selon | Photoinitiateur | Temps de polymérisation (secondes) | m/mn | Anti-adhérence | | |
|---|---|---|---|---|---|---|
| | | | | à 20 °C en N/m | à 70 °C en N/m | CA (%) |
| exemple 2 | A | 0,07 | 20 | 8 | 25 | 100 |
| exemple 2 | B | 0,05 | 28 | 10 | 30 | 100 |
| exemple 1 | A | 0,07 | 20 | 5 | 28 | 100 |
| exemple 1 | B | 0,05 | 28 | 6 | 25 | 100 |
| exemple 4 | B | > 1 | - | non mesurable | | |

A : hydroxy-2,méthyl-2, phényl-1 propanone
B : benzophénone + hydroxy-1 cyclohexyl-phénylcétone
m/mn : vitesse de défilement du papier en mètres par minute.

## Revendications

**1.** Composition organopolysiloxane à reste cyclopentenyle réticulable en couche mince par exposition à la lumière ultraviolette, caractérisée en ce qu'elle comporte :

A. - 100 parties en poids de diorganopolysiloxane comportant par molécule au moins 3 restes cyclopentenyle, chacun de ces groupes étant directement lié, par une liaison SiC, à un atome de silicium différent, et étant choisi parmi ceux de formules

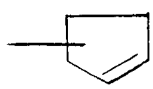 (2)a 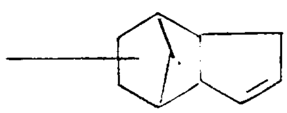 (2)b 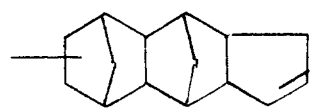 (2)c

B.- 0,01 à 20 parties en poids d'au moins un photoinitiateur.

**2.** Composition selon la revendication 1, caractérisée en ce que le polymère (A) répond à la formule :

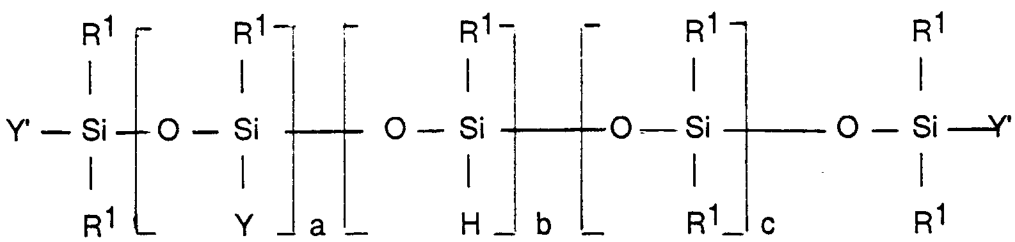 (1)

dans laquelle :

- Y représente un reste cyclopentenyle choisi parmi ceux de formules (2)a, (2)b et (2)c,
- $R^1$ est un radical hydrocarboné monovalent, choisi parmi les radicaux alkyle en C1 - C6 et phényle, au moins 50 % en nombre des radicaux $R^1$ étant méthyle et/ou phényle,
- Y' est Y ou $R^1$,
- a est un nombre entier compris entre 1 et 50 inclus,
- b est un nombre entier compris entre 0 et 50 inclus,
- c est un nombre entier compris entre 0 et 1 000, de préférence entre 10 et 500 sous réserve que si a = 1, Y' est Y
  et si a = 2 au moins un des 2 Y' est Y.

3. Procédé de réticulation d'une composition telle que définie dans la revendication 1 ou 2 et disposée en couche mince, caractérisé en ce que l'apport d'énergie pour ladite réticulation est fournie en totalité par un rayonnement U.V.

4. Procédé permettant de rendre des feuilles de matériau souples non adhérentes à des surfaces auxquelles elles adhèrent normalement, caractérisé en ce qu'il consiste à appliquer une quantité d'une composition conforme à la revendication 1 ou 2, sans solvant, de viscosité inférieure à 5 000 mPa.s à 25 ° C, comprise entre 0,1 à 5 g par $m^2$ de surface à enduire puis en ce que la réticulation de la composition est obtenue par un apport d'énergie dont la totalité est fournie par un rayonnement U.V.

5. Matériaux enduits d'une composition telle que définie dans la revendication 1 ou 2.

**Claims**

1. Organopolysiloxane composition containing cyclopentenyl residues crosslinkable in a thin layer by exposure to ultraviolet light, characterized in that it contains:

   A. - 100 parts by weight of diorganopolysiloxane containing, per molecule, at least 3 cyclopentenyl residues, each of these groups being directly bonded, via an SiC bond, to a different silicon atom and being chosen from those of formulae

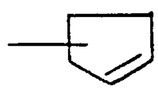 (2)a 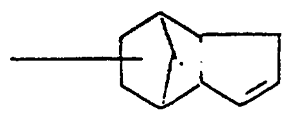 (2)b 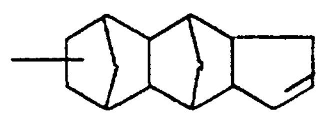 (2)c

   B. - 0.01 to 20 parts by weight of at least one photoinitiator.

2. Composition according to claim 1, characterized in that the polymer (A) corresponds to the formula:

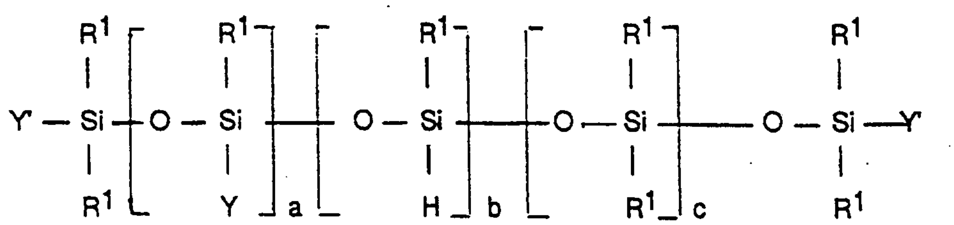 (1)

in which:

- Y represents a cyclopentenyl residue chosen from those of formulae (2)a, (2)b and (2)c,
- $R^1$ is a monovalent hydrocarbon radical chosen from phenyl and C1-C6 alkyl radicals, at least 50% by number of the $R^1$ radicals being methyl and/or phenyl,
- Y' is Y or $R^1$,
- a is an integer between 1 and 50 inclusive,
- b is an integer between 0 and 50 inclusive,
- c is an integer between 0 and 1000, preferably between 10 and 500,
  with the proviso that if a = 1, Y' is Y
  and if a = 2, at least one of the 2 Y' groups is Y.

3. Process for crosslinking a composition as defined in claim 1 or 2 and arranged in a thin layer, characterized in that the energy supply for the said crosslinking is provided entirely by U.V. radiation.

4. Process making it possible to render flexible sheets of material non-adherent to surfaces to which they normally adhere, characterized in that it consists in applying an amount of between 0.1 and 5 g per $m^2$ of surface to be coated of a solvent-free composition in accordance with claim 1 or 2, with a viscosity of less than 5000 mPa•s at 25 ° C, and in that the crosslinking of the composition is then obtained by

an energy supply which is provided entirely by U.V. radiation.

**5.** Materials coated with a composition as defined in claim 1 or 2.

## Patentansprüche

**1.** Organopolysiloxan-Zusammensetzung mit in dünner Schicht durch ultraviolettes Licht aushärtenden Cyclopentenylgruppen, dadurch gekennzeichnet, daß sie umfaßt:

A. - 100 Gewichtsteile Diorganopolysiloxan, das pro Molekül mindestens drei Cyclopentenylreste umfaßt, wobei jede von diesen Gruppen direkt durch eine SiC-Bindung an ein anderes Siliciumatom gebunden ist, und unter den Resten der Formeln

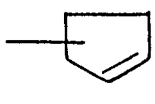 (2)a 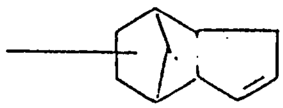 (2)b 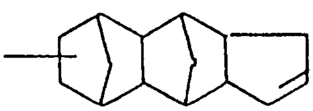 (2)c

ausgewählt wird;

B.- 0,01 bis 20 Gewichtsteile von mindestens einem Photoinitiator.

**2.** Zusammensetzung nach Anspruch 1, dadurch gekennzeichnet, daß das Polymer (A) der Formel (1)

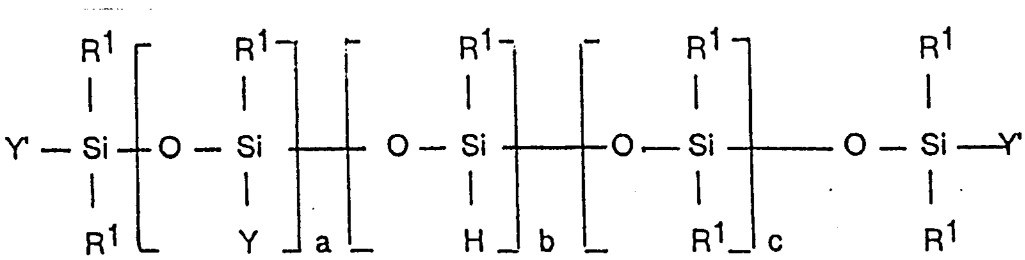 (1)

entspricht, in der

- Y einen Cyclopentenylrest darstellt, ausgewählt unter denen der Formeln (2)a, (2)b und (2)c,
- $R^1$ einen monovalenten Kohlenwasserstoffrest bedeutet, ausgewählt unter den Alkylresten mit 1 bis 6 Kohlenstoffatomen und Phenyl, wobei zahlenmäßig mindestens 50 % der Reste $R^1$ Methyl und/oder Phenyl sind,
- Y' gleich Y oder $R^1$ ist,
- a eine ganze Zahl zwischen 1 und einschließlich 50 ist,
- b eine ganze Zahl zwischen 0 und einschließlich 50 ist,
- c eine ganze Zahl zwischen 0 und 1.000, vorzugsweise zwischen 10 und 500 ist, unter der Bedingung, daß in dem Fall, wo a = 1 ist, Y' gleich Y ist, und wo a = 2 ist, mindestens eines der zwei Y' gleich Y ist.

**3.** Verfahren zur Härtung einer wie in Anspruch 1 oder 2 definierten und in dünner Schicht aufgetragenen Zusammensetzung, dadurch gekennzeichnet, daß die Energiezufuhr für die genannte Härtung vollständig durch UV-Strahlung geliefert wird.

**4.** Verfahren, das es gestattet, Folien aus biegsamem Material an den Flächen nichthaftend zu machen, an denen sie normalerweise haften, dadurch gekennzeichnet, daß es darin besteht, eine Menge einer Zusammensetzung nach Anspruch 1 oder 2, ohne Lösungsmittel und mit einer Viskosität von unter 5.000 mPa•s bei 25 °C, von 0,1 bis 5 g pro $m^2$ zu beschichtende Fläche aufzutragen, und darin, daß anschließend die Härtung der Zusammensetzung durch eine Energiezufuhr erreicht wird, die vollständig durch UV-Strahlung geliefert wird.

**5.** Material, beschichtet mit einer Zusammensetzung wie in Anspruch 1 oder 2 definiert.